# FASCICULE DE BREVET EUROPEEN

(11) **EP 3 425 517 B1**
(45) Date de publication et mention de la délivrance du brevet: **31.05.2023**
(21) Numéro de dépôt: 18178763.1
(22) Date de dépôt: 20.06.2018
(51) Int. Cl.: G06F 13/42

(54) **PROCÉDÉ DE COMMUNICATION ENTRE UN DISPOSITIF MAÎTRE ET N DISPOSITIFS ESCLAVES CONNECTÉS SUR UN BUS DE DONNÉES SYNCHRONE DU TYPE SPI ET DISPOSITIF CORRESPONDANT**
KOMMUNIKATIONSVERFAHREN ZWISCHEN EINEM MASTER-GERÄT UND N SLAVE-GERÄTEN, DIE ÜBER EINEN SYNCHRONEN DATENBUS VOM TYP SPI VERBUNDENEN SIND, UND ENTSPRECHENDES GERÄT
METHOD FOR COMMUNICATION BETWEEN A MASTER DEVICE AND N SLAVE DEVICES CONNECTED TO AN SPI-TYPE SYNCHRONOUS DATA BUS AND CORRESPONDING DEVICE

(30) Priorité: 04.07.2017 FR 1756292
(43) Date de publication de la demande: 09.01.2019
(73) Titulaire: STMicroelectronics (Grand Ouest) SAS, 72100 Le Mans (FR)
(72) Inventeur: BINIGUER, Thierry, 72100 Le Mans (FR)
(74) Mandataire: Casalonga

(56) Documents cités:
- US-A- 5 963 464
- US-A1- 2012 072 626
- US-B1- 8 384 427

## Description

Des modes de réalisation et de mise en oeuvre de l'invention concernent les bus de données synchrone, en particulier des bus de données du type interface de périphérique série SPI, « Serial Peripheral Interface » en langue anglaise.

Sur un bus SPI, les circuits communiquent selon un schéma maître-esclaves où le maître contrôle la communication, traditionnellement en duplex (ou « full-duplex » selon le terme usuel anglais, c'est-à-dire un mode de communication dans lequel la communication se fait simultanément dans les deux sens).

Il existe aussi le mode semi-duplex (ou « half-duplex »), dans lequel une seule ligne bidirectionnelle permet l'échange entre le maître et un esclave, alternativement dans le temps.

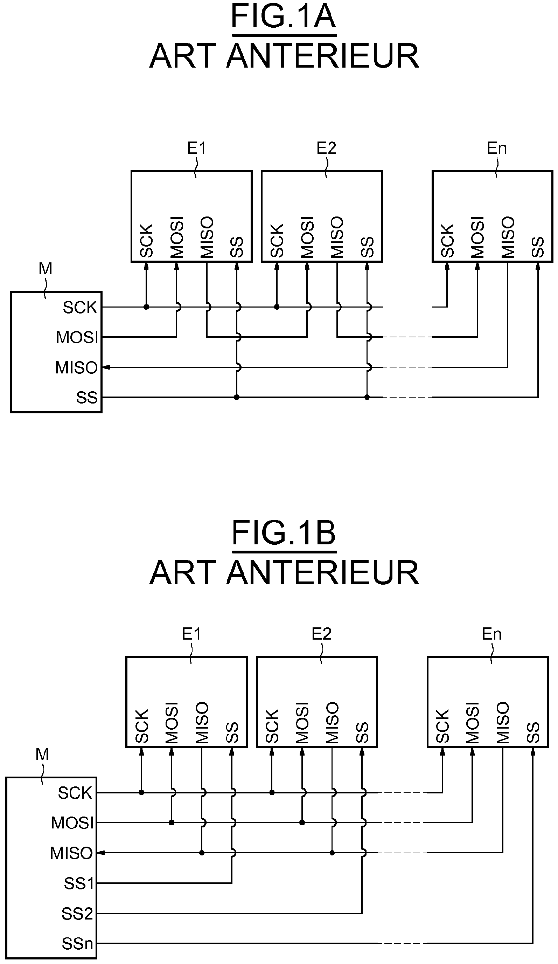

Les figures 1A et 1B représentent les deux types de montages les plus courants d'un bus SPI.

Le périphérique (ou dispositif) maître M génère un signal d'horloge sur une ligne d'horloge SCK et sélectionne le périphérique (ou dispositif) esclave avec lequel il veut communiquer par l'utilisation d'un signal de sélection d'esclave sur une ligne de sélection d'esclave SS, et l'esclave répond aux requêtes du maître.

À chaque coup d'horloge le maître et l'esclave s'échangent un bit via la voie de sortie maître - entrée esclave MOSI (« Master Output - Slave Input » en langue anglaise) et la voie d'entrée maître - sortie esclave MISO (« Master Input - Slave Output » en langue anglaise). Après huit coups d'horloges le maître a transmis un octet à l'esclave et vice-versa. La fréquence du signal d'horloge est réglée selon des caractéristiques propres aux périphériques.

La figure 1A représente une configuration d'un dispositif maître M et de n dispositifs esclaves E1, E2, En sur un bus SPI en série, dans lequel les périphériques sont tous reliés « en guirlande », l'un après l'autre.

Dans cette configuration série, le bus SPI dispose de 4 fils quel que soit le nombre de périphériques, mais présente néanmoins de nombreux inconvénients. Par exemple, les données reçues pendant les premières impulsions d'horloge doivent être transmises à d'autres esclaves pendant les autres impulsions d'horloge pour enfin atteindre le dernier esclave.

Les dispositifs esclaves qui ne sont pas sélectionnés doivent donc quand même être actifs pendant la communication, et une défaillance isolée d'un dispositif esclave interrompt toute la chaîne.

Les dispositifs esclaves se comportent dans l'ensemble de la chaîne comme un registre à décalage, et exécutent une commande contenue dans les dernières données reçues sur ordre du signal de sélection d'esclave SS.

En outre, la fréquence du signal d'horloge généré par le maître est fixe et est limitée par la vitesse de l'esclave le plus lent du bus.

La figure 1B représente une configuration d'un dispositif maître M et de n dispositifs esclaves E1, E2, En sur un bus SPI en parallèle, dans lequel les voies de sortie-entrée MOSI et d'entrée-sortie MISO sont reliées en parallèle à tous les dispositifs esclaves E1-En.

Dans cette configuration parallèle, chaque esclave peut être sélectionné via une ligne de sélection d'esclave SS1, SS2, SSn qui lui est respectivement dédiée.

Cette configuration présente l'avantage que la fréquence du signal d'horloge peut être optimisée à chaque dispositif esclave ES1-ESn, et que les esclaves qui ne sont pas sélectionnés peuvent rester inactifs.

Cependant, au moins une broche du dispositif maître MT est dédiée à chaque dispositif esclave ES1-ESn, ce qui peut être problématique dans le schéma électrique. Par exemple, l'adressage de 32 esclaves nécessiterait 32 broches, ce qui n'est pas physiquement raisonnable.

Par ailleurs, que ce soit en configuration série ou en configuration parallèle, le montage est statique et la chaîne ne peut pas être agrandie dynamiquement pendant une communication.

Le document US8384427 décrit un dispositif logique programmable « PLD » comprenant un port SPI pour recevoir un flux de données binaires, et une broche de sortie de sélection de puce pouvant sélectionner ou désélectionner un autre dispositif pour recevoir un flux de données binaire. Une commande intégrée dans le flux de données binaire reçu permet de commander la broche de sortie de sélection de puce pour sélectionner l'autre dispositif pour recevoir le flux de données binaire. Plusieurs PLD de ce type, connectés en série peuvent ainsi être configurés à partir d'une source de configuration unique ou permettre une relecture de leurs données de configuration pendant qu'ils sont ainsi connectés.

Par conséquent il est souhaitable d'améliorer les performances des bus de donnée du type interface de périphérique série SPI.

A cet égard il est proposé selon un aspect un procédé de communication entre un dispositif maître et N dispositifs esclaves connectés sur un bus de données synchrone comportant un canal de sélection sur lequel on connecte en série le dispositif maître et les N dispositifs esclaves, et un canal de transmission sur lequel on connecte en parallèle le dispositif maître et les N dispositifs esclaves, le procédé comprenant :
une étape de sélection mise en oeuvre par le dispositif maître et les N dispositifs esclaves sur le canal de sélection, comprenant une sélection d'un dispositif esclave sélectionné parmi les N dispositifs esclaves ; et
une étape de transmission mise en oeuvre sur le canal de transmission, comprenant une transmission de données entre le dispositif maître et le dispositif esclave sélectionné.

Le dispositif maître et les N dispositifs esclaves forment une chaîne. Une phase de détection de fin de chaîne est mise en oeuvre au cours de l'étape de transmission et avant l'étape de sélection par chacun des dispositifs esclaves et est mise en oeuvre avant l'étape de sélection par le dispositif maître, ladite phase de détection de fin de chaîne comprenant une détection d'un signal de présence sur le canal de sélection, représentatif d'une position en fin de chaîne dudit dispositif.

Ce procédé permet d'exploiter les avantages des configurations du type série et du type parallèle sans en subir les inconvénients.

Avantageusement, le bus de données synchrone comporte une ligne de sélection de mode et l'étape de sélection comprend :
une première commande de configuration d'esclave destinée à placer les dispositifs esclaves dans un mode série, transmise sur la ligne de sélection de mode et issue du dispositif maître ;
une communication de données d'identification d'esclave entre le dispositif maître et les N dispositifs esclaves ;
une communication d'une commande de sélection d'esclave issue du dispositif maître.

Selon un mode de réalisation, l'étape de transmission comprend une deuxième commande de configuration d'esclave destinée à placer le dispositif esclave sélectionné dans un mode parallèle, transmise sur la ligne de sélection de mode et issue du dispositif maître.

La communication d'une commande de sélection d'esclave peut comprendre en outre une communication d'une commande complémentaire, par exemple une commande d'activation d'un voyant d'indication ou une commande de repos pour une durée donnée.

En d'autres termes, la phase de détection de fin de chaîne est mise en oeuvre au cours d'une étape d'initialisation (c'est-à-dire avant l'étape de sélection) et d'étapes de transmission, par chacun des dispositifs maîtres et esclaves.

Avantageusement, la phase de détection de fin de chaîne comprend, pour chaque dispositif, une application d'une tension de tirage sur une première borne connectée d'un premier côté du canal de sélection et d'une tension de rappel sur une deuxième borne connectée d'un deuxième côté du canal de sélection, une variation de la tension de tirage étant représentative de la présence d'un dispositif esclave dans la direction du premier côté du canal. Dans ce cas, la variation de tension de tirage fait office de signal de présence.

Avantageusement, ladite phase de détection de fin de chaîne est mise en oeuvre périodiquement, de façon à détecter une connexion ou une déconnexion à la volée d'un dispositif esclave sur le bus.

Ces modes de mise en oeuvre permettent d'agrandir dynamiquement la chaîne connectée sur le bus, et d'y connecter autant de dispositifs que voulu sans modifier le protocole de communication. En outre, ce procédé permet selon des modes de mise en oeuvre avantageux d'ajouter ou retirer à la volée un dispositif, c'est-à-dire lorsque qu'une communication est déjà en cours sur le même bus.

Selon un mode de mise en oeuvre, la communication de données d'identification d'esclave comprend la communication de caractéristiques d'esclave comportant la fréquence maximale de signal d'horloge supportée par chacun des N dispositifs esclaves.

Ainsi la transmission de données peut être optimisée relativement aux caractéristiques d'esclave correspondant au dispositif d'esclave sélectionné.

Selon un mode de mise en oeuvre, la communication de données d'identification comporte une énumération du nombre de dispositifs esclaves connectés sur le bus.

Les différentes commandes, communications et transmissions de données peuvent être cadencées selon un protocole de communication de données synchrone du type protocole d'interface de périphérique série SPI.

Selon un autre aspect, il est également proposé un système comprenant un dispositif maître et N dispositifs esclaves connectés sur un bus de données synchrone comportant un canal de sélection et un canal de transmission, le dispositif maître et les N dispositifs esclaves étant connectés en série sur le canal de sélection et connectés en parallèle sur le canal de transmission, et configurés pour :
échanger des données de sélection d'esclave sur le canal de sélection, afin de sélectionner parmi les N dispositifs esclaves un dispositif esclave sélectionné ; et
transmettre des données entre le dispositif maître et le dispositif esclave sélectionné sur le canal de transmission.

Les N dispositifs esclaves et le dispositif maître forment une chaîne. Chacun des dispositifs esclaves est configuré pour détecter une position en fin de chaîne en effectuant une détection d'un signal de présence sur le canal de sélection, représentatif d'une position en fin de chaîne dudit dispositif, pendant la transmission de données transmission et avant d'échanger les données de sélection, et le dispositif maître est configuré pour détecter une position en fin de chaîne en effectuant une détection d'un signal de présence sur le canal de sélection, représentatif d'une position en fin de chaîne dudit dispositif, avant d'échanger des données de sélection.

Avantageusement, le bus de données synchrone comporte une ligne de sélection de mode et le dispositif maître est configuré pour générer sur la ligne de sélection de mode une première commande de configuration d'esclave destinée à placer les dispositifs esclaves dans un mode série, au moment d'échanger des données de sélection d'esclave, et les données de sélection d'esclave comportent une communication de données d'identification d'esclave par les dispositifs esclaves, et une communication d'une commande de sélection d'esclave par le dispositif maître.

Avantageusement, le dispositif maître est configuré pour générer sur la ligne de sélection de mode une deuxième commande de configuration d'esclave destinée à placer le dispositif esclave sélectionné dans un mode parallèle, au moment de transmettre des données avec le dispositif esclave sélectionné.

Avantageusement, chaque dispositif est configuré pour, au moment de la détection du signal de présence sur le canal de sélection, appliquer une tension de tirage sur une première borne connectée d'un premier côté du canal de sélection et une tension de rappel sur une deuxième borne connectée d'un deuxième côté du canal de sélection, une variation de la tension de tirage lors de la mesure étant représentative de la présence d'un dispositif esclave dans la direction du premier côté.

Avantageusement le dispositif maître et les N dispositifs esclaves sont configurés pour détecter une position de fin de chaîne périodiquement, de façon à détecter une connexion ou une déconnexion à la volée d'un dispositif esclave sur le bus.

Selon un mode de réalisation, les N dispositifs esclaves sont configurés pour communiquer des données d'identification d'esclave comprenant des caractéristiques d'esclave comportant la fréquence maximale de signal d'horloge supportée par chacun des N dispositifs esclaves.

Avantageusement, le dispositif maître est configuré pour optimiser ladite transmission de données relativement aux caractéristiques d'esclave correspondant au dispositif d'esclave sélectionné.

Selon un mode de réalisation, le dispositif maître et les dispositifs esclaves sont configurés pour communiquer des données d'identification comportant une énumération du nombre de dispositifs esclaves connectés sur le bus.

Selon un mode de réalisation, le bus de données synchrone comporte une ligne d'horloge et le dispositif maître est configuré pour générer sur la ligne d'horloge un signal d'horloge destiné à cadencer les échanges et transmissions de données entre les dispositifs connectés sur le bus.

Avantageusement, le dispositif maître et les dispositifs esclaves sont configurés pour générer les différentes commandes, communications et transmissions de données cadencées selon un protocole de communication de données synchrone du type protocole d'interface de périphérique série SPI.

Selon un mode de réalisation, le canal de sélection comporte une première ligne de sortie maître - entrée esclave et une première ligne d'entrée maître - sortie esclave, reliant un-à-un en chaîne le dispositif maître et les N dispositifs esclaves, et le canal de transmission comporte une deuxième ligne de sortie maître - entrée esclave et une deuxième ligne d'entrée maître - sortie esclave, reliant en parallèle les N dispositifs esclaves avec le dispositif maître.

Avantageusement, le dispositif maître et les dispositifs esclaves comportent une première interface de bus du type interface de périphérique série SPI, comportant une borne de ligne d'horloge élémentaire, une borne de sortie maître - entrée esclave élémentaire et une borne d'entrée maître - sortie esclave élémentaire, ainsi qu'une deuxième interface de bus comportant une première borne de sortie maître - entrée esclave et une première borne d'entrée maître - sortie esclave, et une deuxième borne de sortie maître - entrée esclave et une deuxième borne d'entrée maître - sortie esclave, la deuxième interface de bus comprenant en outre un commutateur de sortie-entrée reliant la borne de sortie maître - entrée esclave élémentaire à l'une ou l'autre desdites première ou deuxième borne de sortie maître - entrée esclave et un commutateur d'entrée-sortie reliant la borne d'entrée maître - sortie esclave élémentaire à l'une ou l'autre desdites première ou deuxième borne d'entrée maître - sortie esclave.

En outre, il est proposé indépendamment un dispositif maître et un dispositif esclave appartenant ou destiné à appartenir à un système tel que défini ci-avant.

Ces modes de mise en oeuvre et de réalisation permettent une communication d'un dispositif maître avec plusieurs dispositifs esclaves, limitée à six fils uniquement et permettant de changer dynamiquement les deux types de configurations existantes (en parallèle ou en série) afin d'obtenir les meilleures performances dans la communication. En outre, ces modes de mise en oeuvre et de réalisation sont compatibles avec un branchement ou un débranchement « à la volée » d'un dispositif esclave sur le bus pendant une communication.

D'autres avantages et caractéristiques de l'invention apparaîtront à l'examen de la description détaillée de modes de réalisation et de mise en oeuvre, nullement limitatifs, et des dessins annexés sur lesquels :
- les figures 1A et 1B, précédemment décrites, représentent des configurations SPI classiques ;
- les figures 2 à 7 illustrent schématiquement différents modes de réalisation et de mise en oeuvre de l'invention.

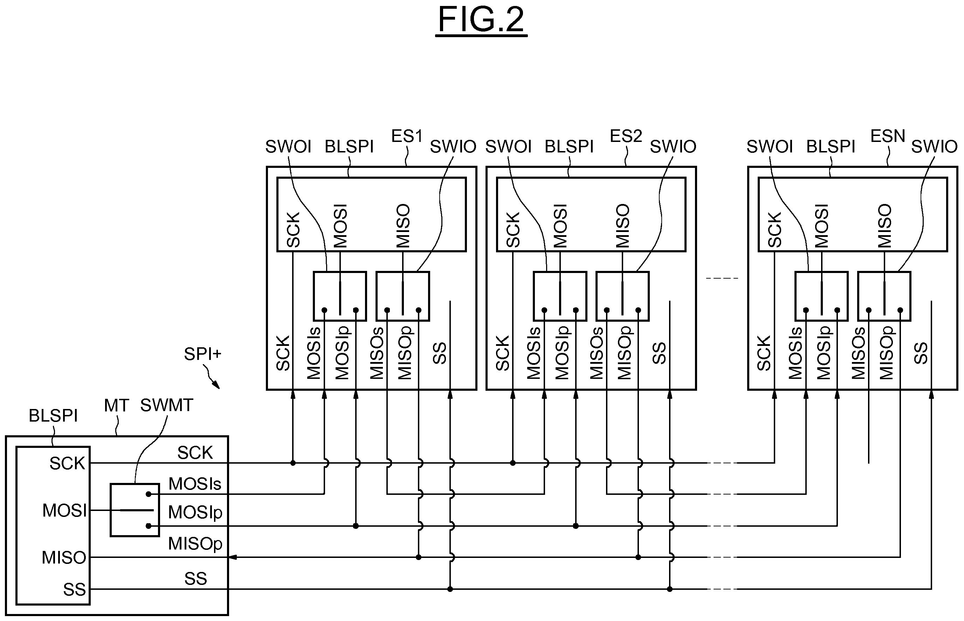

La figure 2 représente un exemple de montage d'un dispositif maître MT et de N dispositifs esclaves ES1, ES2, ESN connectés consécutivement un-à-un sur un bus de données synchrone avantageux SPI+.

Dans cet exemple, le bus SPI+ comporte de façon classique une ligne de signal d'horloge SCK agencée en parallèle, destinée à convoyer un signal d'horloge issu du dispositif maître MT.

Une ligne de sélection de mode SS agencée en parallèle est destinée à convoyer un signal de commande de configuration d'esclave en mode série ou en mode parallèle, issu du dispositif maître MT.

Le bus SPI+ comporte un canal de sélection, agencé en série, et un canal de transmission, agencé en parallèle.

Le canal de sélection comporte une ligne de sortie maître - entrée esclave série MOSIs et une ligne d'entrée maître - sortie esclave série MISOs.

Le canal de transmission comporte une ligne de sortie maître - entrée esclave parallèle MOSIp et une ligne d'entrée maître - sortie esclave parallèle MISOp.

Dans la suite, par souci de concision, les termes de « sortie maître - entrée esclave » et de « entrée maître - sortie esclave » seront désignés respectivement par les termes de « sortie-entrée » et de « entrée-sortie ».

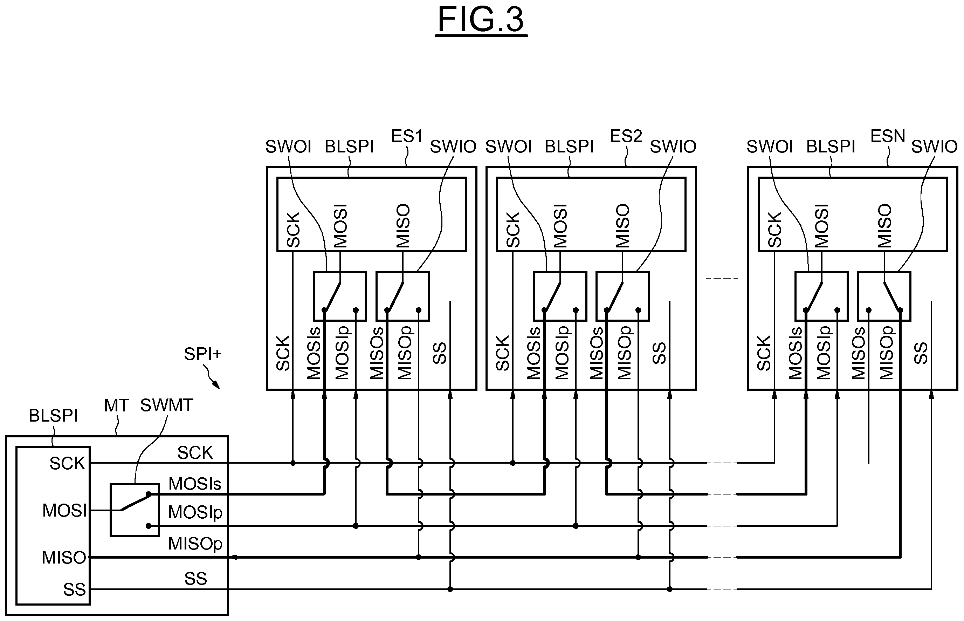

Comme représenté par les traits appuyés (en gras) de la figure 3, dans le canal de sélection, la ligne de sortie-entrée série MOSIs du dispositif maître MT est connectée à la ligne de sortie-entrée série MOSIs du premier dispositif esclave ES1 de la chaîne. La ligne d'entrée-sortie série MISOs du premier dispositif esclave ES1 est connectée sur la ligne de sortie-entrée série MOSIs du deuxième dispositif esclave ES2 de la chaîne. La ligne d'entrée-sortie série MISOs du deuxième dispositif esclave ES2 est connectée à la ligne de sortie-entrée série MOSIs du dispositif esclave suivant, et ainsi de suite jusqu'au dernier dispositif esclave ESN.

La ligne d'entrée-sortie série du dernier dispositif esclave ESn est quant à elle rebouclée sur la ligne d'entrée-sortie série du dispositif maître.

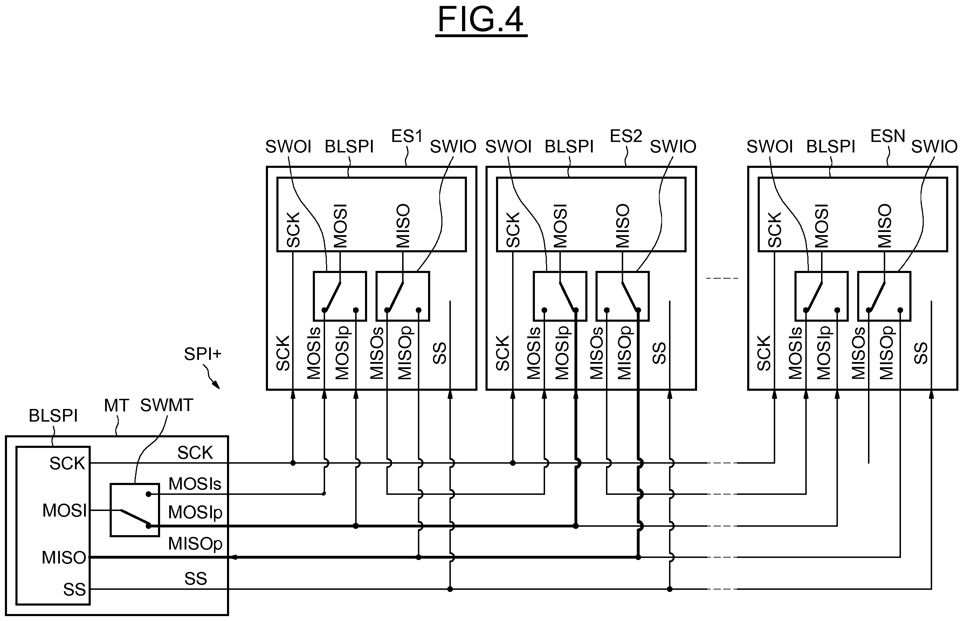

Dans cet exemple, la ligne d'entrée-sortie série utilisée entre le dernier dispositif esclave ESn et le dispositif maître MT est la même ligne que la ligne d'entrée-sortie parallèle MISOp, étant donné, comme il apparaîtra dans la suite notamment en relation avec la figure 4, que cette ligne d'entrée-sortie parallèle MISOp est présente dans le canal de transmission.

Comme représenté par les traits appuyés (en gras) de la figure 4, dans le canal de transmission, la ligne de sortie-entrée parallèle MOSIp du dispositif maître est reliée à toutes les lignes de sortie-entrée parallèle MOSIp des dispositifs esclaves, ainsi que la ligne d'entrée-sortie parallèle MISOp du dispositif maître est reliée à toutes les lignes d'entrée-sortie parallèle MISOp des dispositifs esclaves.

Le canal de sélection est destiné à convoyer notamment des communications d'identification de dispositif esclave, et des communications de sélection d'un dispositif esclave issues du dispositif maître.

Le canal de transmission est destiné à convoyer notamment une transmission de données entre le dispositif maître et un dispositif esclave sélectionné, de façon optimisée pour les capacités du dispositif esclave sélectionné.

Ainsi, chaque dispositif esclave comporte une interface de bus SPI+ comportant six liaisons destinées à être respectivement connectées à la ligne de signal d'horloge SCK, à la ligne de sortie-entrée série MOSIs, à la ligne d'entrée-sortie série MISOs, à la ligne de sortie-entrée parallèle MOSIp, à la ligne d'entrée sortie parallèle MISOp et à la ligne de sélection de mode SS.

Par ailleurs chaque dispositif maître MT et esclave ES1-ESN comporte avantageusement un bloc d'interface SPI BLSPI comportant les bornes classiques d'interface SPI : une borne de signal d'horloge élémentaire SCK, une borne de sortie-entrée élémentaire MOSI et une borne d'entrée-sortie élémentaire MISO.

Le bloc d'interface SPI BLSPI est configuré pour traiter les données communiquées sur les bornes de sortie-entrée MOSI et d'entrée-sortie MISO, cadencées selon un protocole SPI habituel par les cycles du signal d'horloge SCK.

Cela permet une grande compatibilité de communications pour les différents dispositifs connectés au bus SPI+.

Par conséquent, les interfaces de bus SPI+ de chaque dispositif esclave comportent d'une part un commutateur de sortie-entrée SWOI destiné à coupler la première liaison de sortie-entrée MOSIs ou la deuxième liaison de sortie-entrée MOSIp à la borne de sortie-entrée élémentaire MOSI du bloc ; et d'autre part un commutateur d'entrée-sortie SWIO destiné à coupler la première liaison d'entrée-sortie MISOs ou la deuxième liaison d'entrée-sortie MISOp à une borne d'entrée-sortie élémentaire MISO du bloc.

En d'autres termes, les commutateurs de sortie entrée SWOI et d'entrée-sortie SWIO permettent de placer le dispositif respectif dans un mode série ou dans un mode parallèle.

De même, l'interface de bus SPI+ du dispositif maître comporte un commutateur de sortie-entrée SWMT destiné à coupler la première liaison de sortie-entrée MOSIs ou la deuxième liaison de sortie-entrée MOSIp à la borne de sortie-entrée élémentaire MOSI du bloc BLSPI.

Ces différents commutateurs peuvent être par exemple réalisés par la fonction dite « des IO alternés » bien connue de l'homme du métier et disponible dans les microcontrôleurs actuels. Plus précisément les broches d'entrée sortie (IO) sont connectées aux périphériques, ici le bloc BLSPI, au travers un multiplexeur. Deux broches d'entrée sortie peuvent ainsi adresser le bloc BLSPI. Ces deux broches connectables à un même bloc, ici le bloc BLSPI, sont choisies dans la liste des broches d'entrée sortie à partir de la table disponible dans la fiche technique (« datasheet ») du microcontrôleur et fournissant les combinaisons entre toutes les broches d'entrée sortie et toutes les fonctions périphériques.

Bien que non représenté sur les figures 2 à 4, l'interface de bus SPI+ du dispositif maître MT peut comporter d'autre part un commutateur d'entrée-sortie configuré pour pouvoir coupler une première liaison d'entrée-sortie MISOs ou une deuxième liaison d'entrée-sortie MISOp à la borne d'entrée-sortie élémentaire MISO du bloc BLSPI.

Cela étant ce commutateur d'entrée-sortie est, pour un dispositif maître MT, toujours réglé dans la position couplant la deuxième liaison d'entrée-sortie MISOp à la borne d'entrée-sortie élémentaire MISO du bloc BLSPI, en raison de l'unicité, entre le mode série et le mode parallèle, de la ligne d'entrée-sortie MISOp du dispositif maître MT.

Cela permet d'exploiter une interface du bus SPI+ avantageusement identique pour les dispositifs maîtres ou les dispositifs esclaves.

Dans le mode série, le dispositif est connecté au canal de sélection de l'interface SPI+, et dans le mode parallèle, le dispositif est connecté au canal de transmission de l'interface SPI+.

Les commutateurs de sortie-entrée SWOI et d'entrée-sortie SWIO sont commandés par un signal de commande provenant du dispositif respectif, par exemple notamment en fonction du signal communiqué sur la ligne de sélection de mode SS.

En résumé le bus SPI+ permet au dispositif maître MT de communiquer et de sélectionner dynamiquement les deux configurations (ou modes) possibles au moyen du signal de sélection de mode sur la ligne de sélection de mode SS.

Ce signal SS commande chaque esclave dans une procédure de reconfiguration pour agir soit dans un mode série (à des fins de contrôle du bus), soit dans un mode parallèle (à des fins de transmissions et échanges de données).

Une seule instance de protocole SPI est utilisée, laquelle est dynamiquement (re-)routée sur le canal de transmission ou le canal de sélection en fonction du signal de sélection de mode SS.

Les lignes de sortie maître - entrée esclave MOSI et d'entrée maître - sortie esclave MISO de l'instance SPI sont reconfigurés à la volée et deviennent soit les premières lignes MOSIs et MISOs du canal de sélection, soit les deuxièmes lignes MOSIp et MISOp du canal de transmission.

Si une période d'attente est nécessaire, le dispositif maître doit attendre au moins cette période, de même, si un signal de notification est nécessaire, le dispositif maître MT doit attendre la réception de ce signal.

Après une activation ou une réinitialisation, le bus SPI+ est d'office configuré en mode série.

Lorsque la transmission de données est nécessaire, le bus SPI+ est commuté et exécuté en mode parallèle.

Dans les dispositifs esclaves, un registre de contrôle d'état de lecture ou d'écriture est utilisé et les dispositifs esclaves nonsélectionné entrent dans une procédure de détection de présence, tandis que le dispositif esclave sélectionné fonctionne efficacement en mode parallèle.

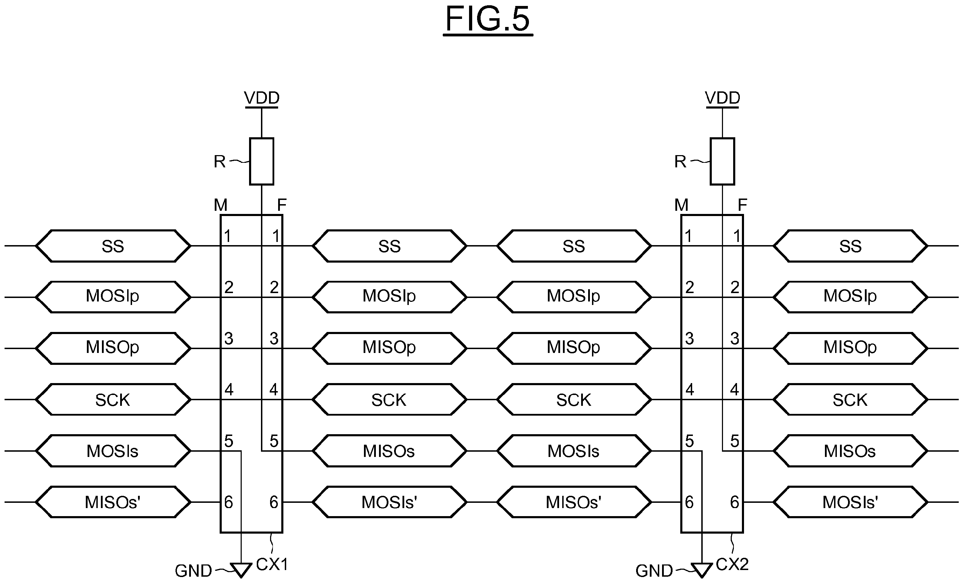

La figure 5 représente des connecteurs six-broches CX1, CX2 permettant de connecter un-à-un des dispositifs sur un bus de donnée SPI+ tel que décrit précédemment en relation avec les figures 2 à 4.

Par exemple le connecteur CX1 appartient à l'interface de bus SPI+ associée au premier dispositif esclave ES1 décrit précédemment en relation avec les figures 2 à 4 et l'autre connecteur CX2 appartient à l'interface de bus SPI+ associée au deuxième dispositif esclave ES2 décrit précédemment en relation avec les figures 2 à 4.

Les connecteurs comportent un côté femelle F comportant six prises 1, 2, 3, 4, 5, 6 et un côté male M comportant six broches 1, 2, 3, 4, 5, 6. Un couple d'une prise et d'une broche connectées ensemble est désigné par le terme de point, suivi de la même référence.

Les points 1 à 4 de chaque connecteur CX forment les connexions parallèles du bus SPI+, c'est-à-dire la ligne de signal d'horloge SCK sur le point 4, la ligne de sélection de mode SS sur le point 1, et le canal de transmission sur les points 2 et 3, soit la ligne de sortie-entrée MOSIp sur le point 2 et la ligne d'entrée-sortie MISOp sur le point 3.

Le point 5 connecte la ligne d'entrée-sortie série MISOs du dispositif esclave ES1 à la ligne de sortie-entrée série MOSIs de son voisin ES2.

Le point 6 connecte, dans cette représentation, une autre ligne de sortie-entrée série MOSIs' du dispositif esclave ES1 à une autre ligne d'entrée-sortie série MISOs' de son voisin ES2.

Lesdites autres lignes de sortie-entrée série MOSIs' et d'entrée-sortie série MISOs' sont des lignes « fictives » ne formant ni le canal de sélection ni le canal de transmission, mais permettent un branchement symétrique (c'est-à-dire que l'ajout d'un dispositif esclave sur la chaîne peut se faire aussi bien en couplant les broches M du nouveau dispositif dans les prises F du dernier dispositif de la chaîne, ou à l'inverse en couplant les prises F du nouveau dispositif sur les broches M du dernier dispositif de la chaîne).

Cette architecture de connecteurs CX1-CX2 présente en outre l'avantage de permettre qu'un même connecteur est compatible aussi bien avec un dispositif maître qu'avec un dispositif esclave, offrant une modularité avantageuse sur le plan matériel ; et, comme détaillé dans la suite, l'avantage d'opérer une détection à gauche (par exemple dans le cas ou un maître deviendrait un esclave) afin de savoir si le dispositif est dans une configuration maître.

Par ailleurs, la figure 5 représente une configuration pour détecter la présence d'un dispositif esclave voisin sur le canal de sélection. En particulier, cette configuration permet à un dispositif maître ou esclave de détecter la présence d'un dispositif esclave connecté à sa droite, dans l'orientation de la figure 5, connecté du côté des prises F.

Pour le dispositif maître, cela permet de vérifier qu'un dispositif esclave est connecté pour démarrer une communication sur le bus SPI+.

Pour un dispositif esclave, cela permet de déterminer s'il est le dernier dispositif connecté sur le bus SPI+.

Si le (dernier) dispositif esclave (ESN) ne détecte pas de présence de dispositif esclave voisin, il configure son interface de bus SPI+ pour reboucler sa ligne d'entrée-sortie élémentaire MISO vers le dispositif maître MT sur la ligne d'entrée-sortie parallèle MISOp du canal de transmission.

La configuration de détection de présence comporte l'application d'une tension résistive de tirage sur une borne connectée d'un côté F du canal de sélection, et d'une tension ferme de rappel sur une borne connectée d'un autre côté M du canal de sélection.

Si un dispositif esclave est connecté sur le bus SPI+, alors l'application de la tension ferme de rappel va faire varier de la tension de tirage, ce qui correspond à une présence d'un dispositif esclave voisin.

Dans l'exemple représenté par la figure 5, la tension résistive de tirage est appliquée sur la prise 5, c'est-à-dire la ligne d'entrée-sortie série MISOs de la voie série, par couplage d'une source de tension de référence de niveau haut VDD via une résistance R. La tension de rappel est appliquée sur la broche 5, c'est-à-dire la ligne de sortie-entrée série MOSIs de la voie série, par couplage direct d'une source de tension de référence de niveau bas GND.

Si deux dispositifs sont connectés l'un à l'autre, alors leurs prise 5 et broche 5 sont reliées en un point 5, et la tension de rappel est fermement appliquée sur ce point, ce qui fait varier, c'est-à-dire chuter dans cet exemple, la valeur de la tension résistive du point 5.

Si aucun dispositif n'est connecté, alors la tension de la prise 5 ne varie pas, c'est-à-dire reste à un niveau haut dans cet exemple.

Une mesure du niveau de tension sur la prise 5 permet ainsi au dispositif esclave de détecter une présence de dispositif voisin.

Avantageusement, cette configuration est mise en oeuvre de façon périodique par les dispositifs esclaves n'étant pas sélectionné, lors d'une commande de configuration d'esclave en mode parallèle.

Cette configuration permet ainsi la détection d'une connexion ou d'une déconnexion à la volée d'un dispositif sur le bus SPI+ et par ailleurs de savoir si le dispositif esclave est le dernier dispositif esclave connecté sur le bus.

Il est par conséquent possible de brancher et de débrancher des dispositifs esclaves sur le bus SPI+ sans interrompre un traitement, les interfaces de bus SPI+ étant capables de s'auto-configurer en fonction des dispositifs connectés sur le bus SPI+.

Le dispositif maître est avantageusement configuré pour mettre en oeuvre une telle détection de présence d'un dispositif esclave voisin sur la voie en série, avant de commencer une communication sur le bus SPI+ en mode série.

Par ailleurs, la détection de dispositif voisin peut être mise en oeuvre de l'autre côté du connecteur six-broches, c'est-à-dire du côté mâle M.

Pour le dispositif maître, cela permet de vérifier si un autre maître est connecté, auquel cas il devient un esclave.

Pour un dispositif esclave, cela permet de déterminer si la chaîne du bus n'est pas coupée. Si elle est coupée, ce dispositif esclave peut devenir un dispositif maître.

La détection du côté mâle M est mise en oeuvre selon exactement le même principe que la détection du côté femelle F, en appliquant une tension résistive de tirage, par exemple sur la broche 6, et une tension de rappel, par exemple sur la prise 6, et en détectant une variation éventuelle de la tension de tirage.

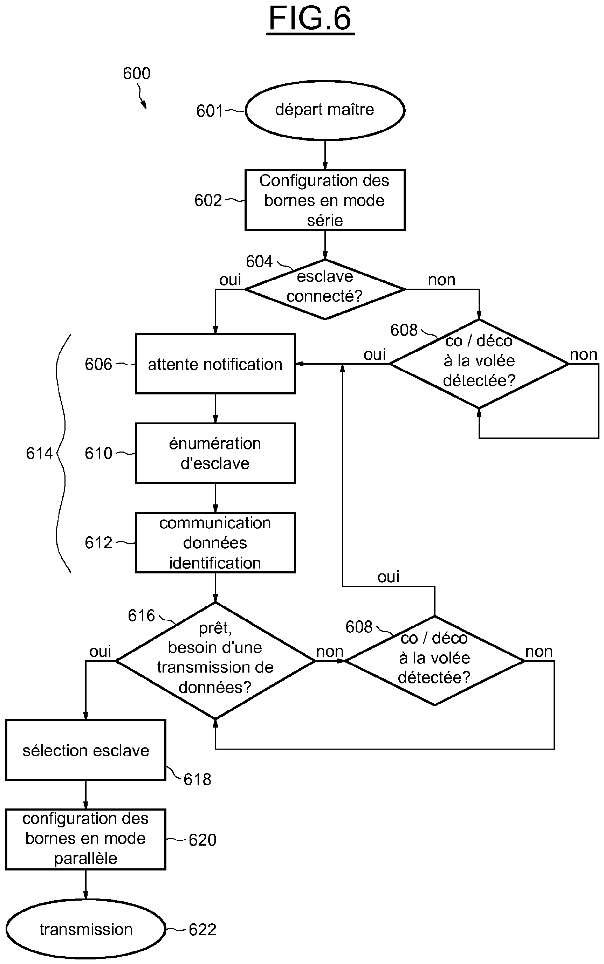

La figure 6 représente un exemple de mode de mise en oeuvre d'une communication 600 sur le bus SPI+ décrit en relation avec les figures 2 à 5, du côté du dispositif maître.

Au début 601 d'une communication sur le bus SPI+, par exemple à l'allumage ou suite à une réinitialisation du dispositif maître, le dispositif maître se configure 602 dans le premier mode duplex (mode série). Le dispositif maître peut, lors de sa configuration en mode série 602 envoyer une première commande de configuration de dispositif esclave en mode série sur la ligne de sélection de mode SS.

Par exemple, en pratique la première commande de configuration d'esclave en mode série est communiquée par un front descendant du signal présent sur la ligne de sélection de mode SS.

Le dispositif maître détecte 604 si un dispositif esclave est connecté sur le bus, par exemple de la façon décrite précédemment en relation avec la figure 5.

En d'autres termes, une phase de détection de fin de chaîne est mise en oeuvre au cours d'une étape d'initialisation (avant l'étape de sélection) par le dispositif maître. Cela permet au dispositif maître de savoir si au moins un esclave est connecté sur le bus SPI+.

Si oui, le dispositif maître se place en attente de notification esclave 606 provenant du dernier dispositif esclave connecté sur le bus (706).

Si non, le dispositif maître se place en attente de détection de connexion à la volée 608. Tant qu'une connexion n'est pas détectée, le dispositif maître reste en attente de détection de connexion à la volée 608.

Lorsqu'une connexion est détectée, le dispositif se place en attente de notification de dispositif esclave 606.

Il est également possible, à des fins de simplification du procédé de communication sur le bus SPI+, que ladite phase d'attente de notification de dispositif esclave 606 soit mise en oeuvre par l'exécution d'un temps de pause fixé, sans besoin d'une notification d'esclave par un dispositif esclave.

Après réception de la notification d'esclave ou écoulement du temps de pause (706), le dispositif maître entame une requête 610 d'énumération du nombre de dispositifs esclaves connectés.

Le dispositif maître doit connaître le nombre de dispositif esclaves au total sur le bus pour pouvoir s'adresser à tous les esclaves ou à un esclave de manière indépendante.

Par exemple une opération d'écriture contenant une commande écho sur quelques bits est envoyée sur la voie série autant de fois que nécessaire jusqu'à réception de cet écho par le dispositif maître. Le nombre d'envoi de la commande écho est égal au nombre de dispositifs esclaves connectés sur le bus SPI+.

Ensuite le dispositif maître envoie une requête de communication de données d'identification de dispositifs esclaves 612, toujours dans le mode série.

Par exemple, la communication de données d'identification comporte la communication de caractéristiques d'esclave telles que la fréquence maximale de signal d'horloge supportée par chacun des dispositifs esclave, la fonction de chacun des esclaves, etc.

Cela permet d'adresser les dispositifs esclaves de manière indépendante avec la vitesse d'horloge appropriée (en mode parallèle) et de régler l'horloge à la plus petite fréquence prise en charge dans la chaîne (en mode série).

Par exemple, la communication de données d'identification comprend une opération de lecture dédiée à chacun des dispositifs esclaves énumérés (au nombre de N), suivie de N opérations blanches pour récupérer les résultats. Une impulsion positive du signal de sélection de mode peut permettre de forcer le traitement dans chaque dispositif esclave.

Les opérations 606, 610 et 612 sont inclues à une phase générale d'identification de dispositif esclaves 614.

Ensuite, le bus SPI+ est considéré comme prêt 616, du point de vue du dispositif maître.

Si le dispositif maître a besoin de mettre en oeuvre une transmission de données avec l'un des esclaves du bus, il communique 618 un signal de sélection d'esclave sur la voie série à l'esclave sélectionné.

Sinon, le dispositif maître se place en attente de détection de connexion à la volée 608. Tant qu'une connexion n'est pas détectée, le dispositif maître teste s'il a besoin de mettre en oeuvre une transmission de données 616 et se replace en attente de détection de connexion à la volée 608.

Lorsque le signal de sélection est transmis au dispositif sélectionné, le dispositif maître se configure en mode parallèle et envoie une commande de sélection de dispositif esclave en mode parallèle sur la ligne de sélection de mode SS. Par exemple la commande de sélection d'esclave peut être codée sur un seul bit.

Ensuite la transmission de données 622 dans la voie parallèle du bus est mise en oeuvre de façon optimisée relativement aux caractéristiques d'esclave du dispositif d'esclave sélectionné, notamment la fréquence maximale de signal d'horloge supportée par le dispositif esclave sélectionné.

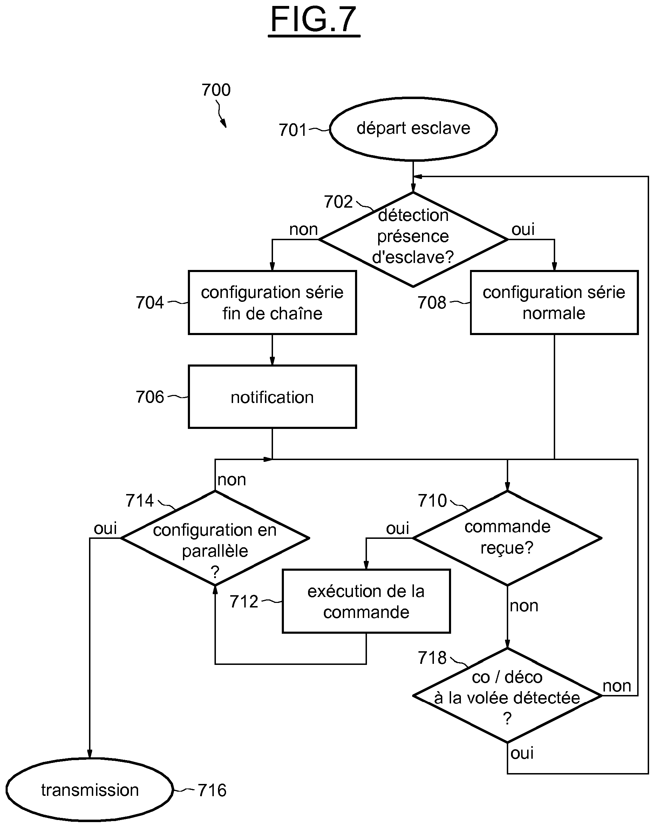

La figure 7 représente un exemple de mode de mise en oeuvre d'une communication 700 sur le bus SPI+ décrit en relation avec les figures 2 à 5, du côté du dispositif esclave.

Au début 701 d'une communication sur le bus SPI+, par exemple lors d'une phase d'initialisation telle que l'allumage ou une réinitialisation du dispositif esclave, le dispositif esclave se configure d'office dans le premier mode duplex (mode série).

Le dispositif esclave détecte 702 alors si un dispositif esclave voisin est connecté sur le bus, par exemple de la façon décrite précédemment en relation avec la figure 5.

Si oui, le dispositif esclave se configure 708 en mode série « normal », la ligne d'entrée-sortie série MISOs de ce dispositif esclave étant connectée sur la ligne de sortie-entrée série MOSIs du dispositif esclave suivant. Ensuite le dispositif esclave normal se place en attente de réception de commande 710.

Si non, le dispositif esclave se configure 704 en mode série « de fin de chaîne », la ligne d'entrée-sortie série de ce dispositif esclave étant connectée sur la ligne de sortie-entrée parallèle MOSIp du dispositif maître.

Le dernier dispositif esclave notifie 706 alors le dispositif maître de sa présence, confirmant le bouclage du canal de sélection du bus SPI+.

Ensuite, le dispositif esclave se place en attente de réception de commande 710.

Lorsqu'une commande provenant du dispositif maître est reçue, le dispositif esclave l'exécute 712. La commande peut être par exemple une requête de communication de données d'identification de dispositifs esclaves (612), la transmission d'une commande écho, ou une sélection d'esclave.

Si l'esclave à reçue une sélection d'esclave et qu'une deuxième commande de configuration d'esclave en mode parallèle est reçue 714 sur la ligne de sélection de mode, alors le dispositif esclave se configure en mode parallèle et met en oeuvre une transmission de données selon les ordres du dispositif maître.

Par exemple, en pratique la deuxième commande de configuration d'esclave en mode parallèle est communiquée par un front montant du signal présent sur la ligne de sélection de mode SS.

Sinon (714), le dispositif esclave se place en attente de réception de commande 710.

Si aucune commande n'est communiquée, le dispositif esclave se place en attente de détection de connexion à la volée 718.

Si une connexion n'est pas détectée, le dispositif esclave se place en attente de détection de connexion/déconnexion à la volée 608.

Si une connexion n'est pas détectée, le dispositif se place en attente de réception de commande 710, et ainsi de suite jusqu'à ce qu'une commande soit reçue ou qu'un dispositif esclave soit connecté/déconnecté à la volée.

Si une connexion/déconnexion à la volée est détectée, le dispositif recommence les étapes de détection de dispositif esclave de fin de chaîne 702 et suivantes.

Ainsi, la phase de détection de fin de chaîne est mise en oeuvre au cours d'une étape d'initialisation (c'est-à-dire avant l'étape de sélection) et au cours des étapes de transmission, par chacun des dispositifs esclaves.

En résumé, le bus SPI+ maître seul/esclaves multiples comporte uniquement six fils quel que soit le nombre d'esclaves. Le bus SPI+ permet de changer dynamiquement les deux types de topologie existante (en parallèle ou en série) pour obtenir les meilleures performances dans le flux de communication, mais aussi de la flexibilité avec une fonctionnalité complémentaire de branchement/débranchement à la volée pendant une exécution.

Les esclaves peuvent par exemple avoir des fonctions simples de bouton, batterie, capteur, moteur, modem, lecteur d'empreinte digitale, GPS, affichage, étage de transmission radiofréquences, qui, étant reliées sur le bus, forment un système plus complexe et modulable.

Bien qu'il ait été décrit des modes de réalisation et de mise en oeuvre adaptés à une communication duplex (« full-duplex »), l'invention est néanmoins compatible avec une communication semi-duplex (« half-duplex »), en outre, les connecteurs six-broches décrits précédemment en relation avec la figure 5 ont été donnés à titre d'exemple, de même que les points sur lesquels sont mis en oeuvre les détections de dispositifs voisins.

## Revendications

1. Procédé de communication entre un dispositif maître (MT) et N dispositifs esclaves (ES1-ESN) sur un bus de données synchrone (SPI+) comportant un canal de sélection (MOSIs, MISOs) sur lequel on connecte en série le dispositif maître (MT) et les N dispositifs esclaves (ES1-ESN), et un canal de transmission (MOSIp, MISOp) sur lequel on connecte en parallèle le dispositif maître et les N dispositifs esclaves, le dispositif maître (MT) et les N dispositifs esclaves (ES1-ESN) formant une chaîne, le procédé comprenant :
- une étape de sélection (614, 618) mise en oeuvre par le dispositif maître (MT) et les N dispositifs esclaves (ES1-ESN) sur le canal de sélection (MOSIs, MISOs), comprenant une sélection d'un dispositif esclave sélectionné parmi les N dispositifs esclaves (ES1-ESN) ; et
- une étape de transmission (620, 622 ; 714, 716) mise en oeuvre sur le canal de transmission (MOSIp, MISOp), comprenant une transmission de données entre le dispositif maître (MT) et le dispositif esclave sélectionné ;
**caractérisé en ce qu'**une phase de détection de fin de chaîne (608 ; 702, 718) est mise en oeuvre au cours de l'étape de transmission et avant l'étape de sélection par chacun des dispositifs esclaves (ES1-ESN) et est mise en oeuvre avant l'étape de sélection par le dispositif maître (MT), ladite phase de détection de fin de chaîne comprenant une détection d'un signal de présence sur le canal de sélection, représentatif d'une position en fin de chaîne dudit dispositif.

2. Procédé selon la revendication 1, le bus de données synchrone comportant une ligne de sélection de mode (SS), dans lequel l'étape de sélection (614, 618) comprend :
- une première commande de configuration d'esclave destinée à placer les dispositifs esclaves (ES1-ESN) dans un mode série (602 ; 704, 708) transmise sur la ligne de sélection de mode (SS) et issue du dispositif maître (MT) ;
- une communication de données d'identification d'esclave (610, 612 ; 712) entre le dispositif maître (MT) et les N dispositifs esclaves (ES1-ESN) ;
- une communication d'une commande de sélection d'esclave (618) issue du dispositif maître (MT).

3. Procédé selon la revendication 2, dans lequel l'étape de transmission (620, 622 ; 714, 716) comprend une deuxième commande de configuration d'esclave destinée à placer le dispositif esclave sélectionné dans un mode parallèle, transmise sur la ligne de sélection de mode (SS) et issue du dispositif maître.

4. Procédé selon l'une quelconque des revendications précédentes, dans lequel la phase de détection de fin de chaîne (608 ; 702, 718) comprend, pour chaque dispositif, une application d'une tension de tirage (VDD, R) sur une première borne (F5) connectée d'un premier côté (F) du canal de sélection (MOSIs, MISOs) et d'une tension de rappel (GND) sur une deuxième borne (M5) connectée d'un deuxième côté (M) du canal de sélection (MOSIs, MISOs), une variation de la tension de tirage (VDD) étant représentative de la présence d'un dispositif esclave dans la direction du premier côté (F).

5. Procédé selon l'une quelconque des revendications précédentes, dans lequel ladite phase de détection de fin de chaîne (608 ; 702, 718) est mise en oeuvre périodiquement, de façon à détecter une connexion ou une déconnexion à la volée d'un dispositif esclave sur le bus (SPI+).

6. Procédé selon l'une quelconque des revendications précédentes prise en combinaison avec la revendication 2, dans lequel la communication de données d'identification d'esclave (610, 612 ; 712) comprend la communication de caractéristiques d'esclave comportant la fréquence maximale de signal d'horloge supportée par chacun des N dispositifs esclaves (ES1-ESN).

7. Procédé selon l'une quelconque des revendications précédentes prise en combinaison avec la revendication 2, dans lequel la communication de données d'identification (610, 612 ; 712) comporte une énumération (610) du nombre (N) de dispositifs esclave connectés sur le bus (SPI+).

8. Procédé selon l'une quelconque des revendications précédentes, dans lequel les différentes commandes, communications et transmissions de données sont cadencées selon un protocole de communication de données synchrone du type protocole d'interface de périphérique série SPI.

9. Système comprenant un dispositif maître (MT) et N dispositifs esclaves (ES1-ESN) connectés sur un bus de données synchrone (SPI+) comportant un canal de sélection (MOSIs, MISOs) et un canal de transmission (MOSIp, MISOp), le dispositif maître (MT) et les N dispositifs esclaves (ES1-ESN) étant connectés en série sur le canal de sélection (MOSIs, MISOs) et connectés en parallèle sur le canal de transmission (MOSIp, MISOp), les N dispositifs esclaves (ES1-ESN) et le dispositif maître (MT) formant une chaîne, et configurés pour :
- échanger des données de sélection d'esclave (614, 618) sur le canal de sélection (MOSIs, MISOs), afin de sélectionner parmi les N dispositifs esclaves (ES1-ESN) un dispositif esclave sélectionné ; et
- transmettre des données (622) entre le dispositif maître (MT) et le dispositif esclave sélectionné sur le canal de transmission (MOSIp, MISOp) ;
**caractérisé en ce que** chacun des dispositifs esclaves (ES1-ESN) est configuré pour détecter une position en fin de chaîne en effectuant une détection d'un signal de présence sur le canal de sélection (MOSIs, MISOs), représentatif d'une position en fin de chaîne dudit dispositif (604, 608 ; 718), pendant la transmission de données transmission (622) et avant d'échanger les données de sélection (614, 618), et le dispositif maître (MT) est configuré pour détecter une position en fin de chaîne en effectuant une détection d'un signal de présence sur le canal de sélection (MOSIs, MISOs), représentatif d'une position en fin de chaîne dudit dispositif (604, 608 ; 718), avant d'échanger des données de sélection (614, 618).

10. Système selon la revendication 9, dans lequel le bus de données synchrone (SPI+) comporte une ligne de sélection de mode (SS) et dans lequel le dispositif maître (MT) est configuré pour générer sur la ligne de sélection de mode (SS) une première commande de configuration d'esclave destinée à placer les dispositifs esclaves (ES1-ESN) dans un mode série (602 ; 704, 708), au moment d'échanger des données de sélection d'esclave, et dans lequel les données de sélection d'esclave comportent une communication de données d'identification d'esclave (612) par les dispositifs esclaves, et une communication d'une commande de sélection d'esclave (618) par le dispositif maître (MT).

11. Système selon l'une quelconque des revendications 9 ou 10, dans lequel le dispositif maître (MT) est configuré pour générer sur la ligne de sélection de mode (SS) une deuxième commande de configuration d'esclave destinée à placer le dispositif esclave sélectionné dans un mode parallèle (620), au moment de transmettre des données (622) avec le dispositif esclave sélectionné.

12. Système selon l'une quelconque des revendications 9 à 11, dans lequel chaque dispositif (MT, ES1-ESN) est configuré pour, au moment de la détection d'un signal de présence sur le canal de sélection (MOSIs, MISOs), appliquer une tension de tirage (VDD, R) sur une première borne (F5) connectée d'un premier côté (F) du canal de sélection (MOSIs, MISOs) et une tension de rappel (GND) sur une deuxième borne (M5) connectée d'un deuxième côté (M) du canal de sélection (MOSIs, MISOs), une variation de la tension de tirage lors de la mesure étant représentative de la présence d'un dispositif esclave directement voisin dans la direction du premier côté.

13. Système selon l'une quelconque des revendications 9 à 12, dans lequel le dispositif maître (MT) et les N dispositifs esclaves (ES1-ESN) sont configurés pour détecter une position en fin de chaîne périodiquement, de façon à détecter une connexion ou une déconnexion à la volée d'un dispositif esclave sur le bus.

14. Système selon l'une quelconque des revendications 9 à 13 prise en combinaison avec la revendication 11, dans lequel les N dispositifs esclaves (ES1-ESN) sont configurés pour communiquer des données d'identification d'esclave (612) comprenant des caractéristiques d'esclave comportant la fréquence maximale de signal d'horloge supportée par chacun des N dispositifs esclaves (ES1-ESN).

15. Système selon l'une quelconque des revendications 9 à 14 prise en combinaison avec la revendication 10, dans lequel le dispositif maître (MT) et les dispositifs esclaves (ES1-ESN) sont configurés pour communiquer des données d'identification (612) comportant une énumération du nombre (N) de dispositifs esclaves connectés sur le bus (SPI+).

16. Système selon l'une quelconque des revendications 9 à 15, dans lequel le bus de données synchrone (SPI+) comporte une ligne d'horloge (SCK) et le dispositif maître (MT) est configuré pour générer un signal d'horloge sur la ligne d'horloge (SCK), destiné à cadencer les échanges et transmissions de données entre les dispositifs (MT, ES1-ESN) connectés sur le bus (SPI+).

17. Système selon l'une quelconque des revendications 9 à 16, dans lequel le dispositif maître (MT) et les dispositifs esclaves (ES1-ESN) sont configurés pour générer les différentes commandes, communications et transmissions de données sont cadencées selon un protocole de communication de données synchrone du type protocole d'interface de périphérique série SPI.

18. Système selon l'une quelconque des revendications 9 à 17, dans lequel le canal de sélection comporte une première ligne de sortie maître - entrée esclave (MOSIs) et une première ligne d'entrée maître - sortie esclave (MISOs), reliant un-à-un en chaîne le dispositif maître (MT) et les N dispositifs esclaves (ES1-ESN), et le canal de transmission comporte une deuxième ligne de sortie maître - entrée esclave (MOSIp) et une deuxième ligne d'entrée maître - sortie esclave (MOSIp), reliant en parallèle les N dispositifs esclaves (ES1-ESN) avec le dispositif maître (MT).

19. Système selon la revendication 18, dans lequel le dispositif maître (MT) et les dispositif esclaves (ES1-ESN) comportent une première interface de bus (BLSPI) du type interface de périphérique série SPI, comportant une borne de ligne d'horloge élémentaire (SCK), une borne de sortie maître - entrée esclave élémentaire (MOSI) et une borne d'entrée maître - sortie esclave élémentaire (MISO), ainsi qu'une deuxième interface de bus comportant une première borne de sortie maître - entrée esclave (MOSIs) et une première borne d'entrée maître - sortie esclave (MISOs), et une deuxième borne de sortie maître - entrée esclave (MOSIp) et une deuxième borne d'entrée maître - sortie esclave (MOSIp), la deuxième interface de bus comprenant en outre un commutateur de sortie-entrée (SWOI) reliant la borne de sortie maître - entrée esclave élémentaire (MOSI) à l'une ou l'autre desdites première ou deuxième borne de sortie maître - entrée esclave (MOSIs, MOSIp) et un commutateur d'entrée-sortie (SWIO) reliant la borne d'entrée maître - sortie esclave élémentaire (MISO) à l'une ou l'autre desdites première ou deuxième borne d'entrée maître - sortie esclave (MISOs, MISOp).

## Patentansprüche

1. Verfahren zur Kommunikation zwischen einem Master-Gerät (MT) und N Slave-Geräten (ES1-ESN) auf einem synchronen Datenbus (SPI+), einen Auswahlkanal (MOSIs, MISOs) beinhaltend, auf dem das Master-Gerät (MT) und die N Slave-Geräte (ES1-ESN) in Reihe geschaltet werden, und einen Übertragungskanal (MOSIp, MISOp), auf dem das Master-Gerät und die N Slave-Geräte parallel geschaltet werden, wobei das Master-Gerät (MT) und die N Slave-Geräte (ES1-ESN) eine Kette bilden, wobei das Verfahren umfasst:
- einen Auswahlschritt (614, 618), der vom Master-Gerät (MT) und den N Slave-Geräten (ES1-ESN) auf dem Auswahlkanal (MOSIs, MISOs) ausgeführt wird, eine Auswahl eines Slave-Geräts umfassend, die aus den N Slave-Geräten (ES1-ESN) ausgewählt wird; und
- einen Übertragungsschritt (620, 622; 714, 716), der auf dem Übertragungskanal (MOSIp, MISOp) ausgeführt wird, eine Datenübertragung zwischen dem Master-Gerät (MT) und dem ausgewählten Slave-Gerät umfassend;
**dadurch gekennzeichnet, dass** eine Phase der Kettenenderfassung (608; 702, 718) während des Übertragungsschritts und vor dem Auswahlschritt von jedem der Slave-Geräte (ES1-ESN) ausgeführt wird, und vor dem Auswahlschritt vom Master-Gerät (MT) ausgeführt wird, wobei die Phase der Kettenenderfassung eine Erfassung eines Anwesenheitssignals auf dem Auswahlkanal umfasst, das für eine Kettenendposition des Geräts repräsentativ ist.

2. Verfahren nach Anspruch 1, wobei der synchrone Datenbus eine Modusauswahllinie (SS) beinhaltet, wobei der Auswahlschritt (614, 618) umfasst:
- einen ersten Slave-Konfigurationsbefehl, der dazu bestimmt ist, die Slave-Geräte (ES1-ESN) in einen seriellen Modus (602; 704, 708) zu versetzen, der über die Modusauswahllinie (SS) übertragen und vom Master-Gerät (MT) ausgegeben wird;
- eine Datenkommunikation der Slave-Identifikation (610, 612; 712) zwischen dem Master-Gerät (MT) und den N Slave-Geräten (ES1-ESN);
- eine Befehlskommunikation einer Slave-Auswahl (618), die vom Master-Gerät (MT) ausgegeben wird.

3. Verfahren nach Anspruch 2, wobei der Übertragungsschritt (620, 622; 714, 716) einen zweiten Slave-Konfigurationsbefehl umfasst, der dazu bestimmt ist, das ausgewählten Slave-Gerät in einen parallelen Modus zu versetzen, der über die Modusauswahllinie (SS) übertragen wird und vom Master-Gerät ausgegeben wird.

4. Verfahren nach einem der vorhergehenden Ansprüche, wobei die Phase der Kettenenderfassung (608; 702, 718), für jedes Gerät, das Anlegen einer Zugspannung (VDD, R) an einer ersten Klemme (F5) umfasst, die mit einer ersten Seite (F) des Auswahlkanals (MOSIs, MISOs) verbunden ist, und einer Rückstellspannung (GND) an einer zweiten Klemme (M5), die mit einer zweiten Seite (M) des Auswahlkanals (MOSIs, MISOs) verbunden ist, wobei eine Änderung der Zugspannung (VDD) repräsentativ ist für die Anwesenheit eines Slave-Geräts in der Richtung der ersten Seite (F).

5. Verfahren nach einem der vorhergehenden Ansprüche, wobei die Phase der Kettenenderfassung (608; 702, 718) periodisch ausgeführt wird, um eine Schnellverbindung oder -trennung von einem Slave-Gerät am Bus (SPI+) zu erfassen.

6. Verfahren nach einem der vorhergehenden Ansprüche in Kombination mit Anspruch 2, wobei die Datenkommunikation der Slave-Identifikation (610, 612; 712) die Kommunikation der Slave-Eigenschaften umfasst, die die maximale Taktsignalfrequenz beinhalten, die von jedem der N Slave-Geräte (ES1-ESN) unterstützt wird.

7. Verfahren nach einem der vorhergehenden Ansprüche in Kombination mit Anspruch 2, wobei die Datenkommunikation der Identifikation (610, 612; 712) eine Aufführung (610) der Anzahl (N) der mit dem Bus (SPI+) verbundenen Slave-Geräte beinhaltet.

8. Verfahren nach einem der vorhergehenden Ansprüche, wobei die verschiedenen Befehle, Kommunikationen und Datenübertragungen gemäß einem synchronen Datenkommunikationsprotokoll des Typs SPI Serial Peripheral Interface Protocol getaktet werden.

9. System, das ein Master-Gerät (MT) und N Slave-Geräte (ES1-ESN) umfasst, die auf einem synchronen Datenbus (SPI+) verbunden sind, einen Auswahlkanal (MOSIs, MISOs) und einem Übertragungskanal (MOSIp, MISOp) beinhaltend, wobei das Master-Gerät (MT) und die N Slave-Geräte (ES1-ESN) auf dem Auswahlkanal (MOSIs, MISOs) in Reihe geschaltet und auf dem Übertragungskanal (MOSIp, MISOp) parallel geschaltet sind, wobei die N Slave-Geräte (ES1-ESN) und das Master-Gerät (MT) eine Kette bilden, und konfiguriert sind zum:
- Austausch von Slave-Auswahldaten (614, 618) auf dem Auswahlkanal (MOSIs, MISOs), um aus den N Slave-Geräten (ES1-ESN) ein ausgewähltes Slave-Gerät auszuwählen; und
- Übertragen von Daten (622) zwischen dem Master-Gerät (MT) und dem ausgewählten Slave-Gerät auf dem Übertragungskanal (MOSIp, MISOp);
**dadurch gekennzeichnet, dass** jedes der Slave-Geräte (ES1-ESN) konfiguriert ist, um eine Kettenendposition zu erfassen, eine Erfassung eines Anwesenheitssignals auf dem Auswahlkanal (MOSIs, MISOs) vornehmend, das für eine Kettenendposition des Geräts (604, 608; 718) repräsentativ ist, während der Übertragung von Übertragungsdaten (622) und vor dem Austausch der Auswahldaten (614, 618), und wobei das Master-Gerät (MT) konfiguriert ist, um eine Kettenendposition zu erfassen, eine Erfassung eines Anwesenheitssignals auf dem Auswahlkanal (MOSIs, MISOs) vornehmend, das für eine Kettenendposition des Geräts (604, 608; 718) repräsentativ ist, vor dem Austausch von Auswahldaten (614, 618).

10. System nach Anspruch 9, wobei der synchrone Datenbus (SPI+) eine Modusauswahllinie (SS) beinhaltet und wobei das Master-Gerät (MT) konfiguriert ist, um auf der Modusauswahllinie (SS) einen ersten Slave-Konfigurationsbefehl zu erzeugen, der bestimmt ist, um die Slave-Geräte (ES1-ESN) in einen seriellen Modus (602; 704, 708) zu versetzen, zum Zeitpunkt des Austauschs der Slave-Auswahldaten, und wobei die Slave-Auswahldaten eine Kommunikation von Slave-Identifikationsdaten (612) durch die Slave-Geräte beinhalten, und eine Kommunikation eines Slave-Auswahlbefehls (618) durch das Master-Gerät (MT).

11. System nach einem der Ansprüche 9 oder 10, wobei das Master-Gerät (MT) konfiguriert ist, um auf der Modusauswahllinie (SS) einen zweiten Slave-Konfigurationsbefehl zu erzeugen, der bestimmt ist, um das ausgewählte Slave-Gerät in einen parallelen Modus (620) zu versetzen, zum Zeitpunkt der Übertragung von Daten (622) mit dem ausgewählten Slave-Gerät.

12. System nach einem der Ansprüche 9 bis 11, wobei jedes Gerät (MT, ES1-ESN) konfiguriert ist, um, zum Zeitpunkt der Erfassung eines Anwesenheitssignals auf dem Auswahlkanal (MOSIs, MISOs), eine Zugspannung (VDD, R) an eine erste Klemme (F5) anzulegen, die mit einer ersten Seite (F) des Auswahlkanals (MOSIs, MISOs) verbunden ist, und eine Rückstellspannung (GND) an eine zweite Klemme (M5) anzulegen, die mit einer zweiten Seite (M) des Auswahlkanals (MOSIs, MISOs) verbunden ist, wobei eine Änderung der Zugspannung während der Messung repräsentativ ist für die Anwesenheit eines direkt benachbarten Slave-Geräts in der Richtung der ersten Seite.

13. System nach einem der Ansprüche 9 bis 12, wobei das Master-Gerät (MT) und die N Slave-Geräte (ES1-ESN) konfiguriert sind, um periodisch eine Kettenendposition zu erfassen, um eine Schnellverbindung oder -trennung von einem Slave-Gerät am Bus zu erfassen.

14. System nach einem der Ansprüche 9 bis 13 in Kombination mit Anspruch 11, wobei die N Slave-Geräte (ES1-ESN) konfiguriert sind, um Slave-Identifikationsdaten (612) zu kommunizieren, die Slave-Eigenschaften umfassen, die die maximale Taktsignalfrequenz beinhalten, die von jedem der N Slave-Geräte (ES1-ESN) unterstützt wird.

15. System nach einem der Ansprüche 9 bis 14 in Kombination mit Anspruch 10, wobei das Master-Gerät (MT) und die Slave-Geräte (ES1-ESN) konfiguriert sind, um Identifikationsdaten (612) zu kommunizieren, die eine Aufführung der Anzahl (N) der mit dem Bus (SPI+) verbundenen Slave-Geräte beinhalten.

16. System nach einem der Ansprüche 9 bis 15, wobei der synchrone Datenbus (SPI+) eine Taktlinie (SCK) beinhaltet und das Master-Gerät (MT) konfiguriert ist, um ein Taktsignal auf der Taktlinie (SCK) zu erzeugen, das bestimmt ist, um den Austausch und die Übertragung von Daten zwischen Geräten (MT, ES1-ESN), die mit dem Bus (SPI+) verbunden sind, zu takten.

17. System nach einem der Ansprüche 9 bis 16, wobei das Master-Gerät (MT) und die Slave-Geräte (ES1-ESN) konfiguriert sind, um die verschiedenen Befehle zu erzeugen, Kommunikationen und Datenübertragungen sind gemäß einem synchronen Datenkommunikationsprotokoll vom Typ SPI Serial Peripheral Interface Protocol getaktet.

18. System nach einem der Ansprüche 9 bis 17, wobei der Auswahlkanal eine erste Ausgang-Master/Eingang-Slave-Linie (MOSIs) und eine erste Eingang-Master/Ausgang-Slave-Linie (MISOs) beinhaltet, die das Master-Gerät (MT) und die N Slave-Geräte (ES1-ESN) eins zu eins verketten, und der Übertragungskanal eine zweite Ausgang-Master/Eingang-Slave-Linie (MOSIp) und eine zweite Eingang-Master/Ausgang-Slave-Linie (MOSIp) beinhaltet, die die N Slave-Geräte (ES1-ESN) parallel an die Master-Geräte (MT) anschließen.

19. System nach Anspruch 18, wobei das Master-Gerät (MT) und die Slave-Geräte (ES1-ESN) eine erste Busschnittstelle (BLSPI) vom Typ SPI Serial Peripheral Interface beinhalten, die eine elementare Taktlinienklemme (SCK) beinhaltet, eine elementare Ausgang-Master/Eingang-Slave-Klemme (MOSI) und eine elementare Eingang-Master/Ausgang-Slave-Klemme (MISO), sowie eine zweite Busschnittstelle, die eine erste Ausgang-Master/Eingang-Slave-Klemme (MOSIs) und eine erste Eingang-Master/Ausgang-Slave-Klemme (MISOs) beinhaltet, und eine zweite Ausgang-Master/Eingang-Slave-Klemme (MOSIp) und eine zweite Eingang-Master/Ausgang-Slave-Klemme (MOSIp), wobei die zweite Busschnittstelle ferner einen Ausgang/Eingang-Wechselschalter (SWOI) umfasst, der die elementare Ausgang-Master/Eingang-Slave-Klemme (MOSI) an die eine oder die andere der ersten oder zweiten Ausgang-Master/Eingang-Slave-Klemmen (MOSIs, MOSIp) anschließt, und einen Eingang/Ausgang-Wechselschalter (SWIO), der die elementare Eingang-Master/Ausgang-Slave-Klemme (MISO) an die eine oder die andere der ersten oder zweiten Eingang-Master/Ausgang-Slave-Klemmen (MISOs, MISOp) anschließt.

## Claims

1. A method for communication between a master device (MT) and N slave devices (ES1-ESN) on a synchronous data bus (SPI+) including a selection channel (MOSIs, MISOs) on which the master device (MT) and the N slave devices (ES1-ESN) are connected in series, and a transmission channel (MOSIp, MISOp) on which the master device and the N slave devices are connected in parallel, the master device (MT) and the N slave devices (ES1-ESN) forming a chain, the method comprising:
- a selection step (614, 618) implemented by the master device (MT) and the N slave devices (ES1-ESN) on the selection channel (MOSIs, MISOs), comprising a selection of a slave device which is selected from the N slave devices (ES1-ESN); and
- a transmission step (620, 622; 714, 716) implemented on the transmission channel (MOSIp, MISOp), comprising a data transmission between the master device (MT) and the selected slave device;
**characterised in that** an end of chain detection phase (608; 702, 718) is implemented during the transmission step and before the selection step by each of the slave devices (ES1-ESN) and is implemented before the selection step by the master device (MT), said end of chain detection phase comprising a detection of a presence signal on the selection channel, representative of a position at the end of chain of said device.

2. The method according to claim 1, the synchronous data bus including a mode selection line (SS), wherein the selection step (614, 618) comprises:
- a first slave configuration command intended to place the slave devices (ES1-ESN) in a serial mode (602; 704, 708) transmitted on the mode selection line (SS) and originating from the master device (MT);
- a communication of slave identification data (610, 612; 712) between the master device (MT) and the N slave devices (ES1-ESN) ;
- a communication of a slave selection command (618) originating from the master device (MT).

3. The method according to claim 2, wherein the transmission step (620, 622; 714, 716) comprises a second slave configuration command to place the selected slave device in a parallel mode, transmitted over the mode selection line (SS) and originating from the master device.

4. The method according to any one of the preceding claims, wherein the end of chain detection phase (608; 702, 718) comprises, for each device, an application of a drawdown voltage (VDD, R) on a first terminal (F5) connected to a first side (F) of the selection channel (MOSIs, MISOs) and of a pull-up voltage (GND) on a second terminal (M5) connected to a second side (M) of the selection channel (MOSIs, MISOs), a variation of the drawdown voltage (VDD) being representative of the presence of a slave device in the direction of the first side (F).

5. The method according to any one of the preceding claims, wherein said end of chain detection phase (608; 702, 718) is implemented periodically, so as to detect an on-the-fly connection or disconnection of a slave device on the bus (SPI+)

6. The method according to any one of the preceding claims taken in combination with claim 2, wherein the communication of slave identification data (610, 612; 712) comprises the communication of slave characteristics including the maximum frequency of clock signal supported by each of the N slave devices (ES1-ESN).

7. The method according to any one of the preceding claims taken in combination with claim 2, wherein the communication of identification data (610, 612; 712) includes an enumeration (610) of the number (N) of slave devices connected on the bus (SPI+).

8. The method according to any one of the preceding claims, wherein the different commands, communications and data transmissions are clocked according to a synchronous data communication protocol of the serial peripheral interface SPI protocol type.

9. A system comprising a master device (MT) and N slave devices (ES1-ESN) connected on a synchronous data bus (SPI+) including a selection channel (MOSIs, MISOs) and a transmission channel (MOSIp, MISOp), the master device (MT) and the N slave devices (ES1-ESN) being connected in series on the selection channel (MOSIs, MISOs) and connected in parallel on the transmission channel (MOSIp, MISOp), the N slave devices (ES1-ESN) and the master device (MT) forming a chain, and configured to:
- exchange slave selection data (614, 618) on the selection channel (MOSIs, MISOs), in order to select a selected slave device from the N slave devices (ES1-ESN); and
- transmit data (622) between the master device (MT) and the selected slave device on the transmission channel (MOSIp, MISOp):
**characterised in that** each of the slave devices (ES1-ESN) is configured to detect an end of chain position at the end of chain by detecting a presence signal on the selection channel (MOSIs, MISOs), representative of an end of chain position of said device (604, 608; 718), during the transmission of transmission data (622) and before exchanging the selection data (614, 618), and the master device (MT) is configured to detect an end of chain position by detecting a presence signal on the selection channel (MOSIs, MISOs), representative of an end of chain position of said device (604, 608; 718), before exchanging selection data (614, 618)

10. The system according to claim 9, wherein the synchronous data bus (SPI+) includes a mode selection line (SS) and wherein the master device (MT) is configured to generate, on the mode selection line (SS), a first slave configuration command intended to place the slave devices (ES1-ESN) in a serial mode (602; 704, 708), at the moment of exchanging slave selection data, and wherein the slave selection data include a communication of slave identification data (612) by the slave devices, and a communication of a slave selection command (618) by the master device (MT).

11. The system according to any one of claims 9 or 10, wherein the master device (MT) is configured to generate, on the mode selection line (SS), a second slave configuration command intended to place the selected slave device in a parallel mode (620), at the moment of transmitting data (622) with the selected slave device.

12. The system according to any one of claims 9 to 11, wherein each device (MT, ES1-ESN) is configured to, at the moment of detecting a presence signal on the selection channel (MOSIs, MISOSs), apply a drawdown voltage (VDD, R) on a first terminal (F5) connected to a first side (F) of the channel (MOSIs, MISOs) and a pull-up voltage (GND) on a second terminal (MS) connected to a second side (M) of the selection channel (MOSIs, MISOs), a variation of the pull-up voltage during the measurement being representative of the presence of a directly adjacent slave device in the direction of the first side

13. The system according to any one of claims 9 to 12, wherein the master device (MT) and the N slave devices (ES1-ESN) are configured to detect an end of chain position periodically, so as to detect an on-the-fly connection or disconnection of a slave device on the bus.

14. A system according to any one of claims 9 to 13 taken in combination with claim 11, wherein the N slave devices (ES1-ESN) are configured to communicate slave identification data (612) comprising slave characteristics including the maximum clock signal frequency supported by each of the N slave devices (ES1-ESN).

15. The system according to any one of claims 9 to 14 taken in combination with claim 10, wherein the master device (MT) and the slave devices (ES1-ESN) are configured to communicate identification data (612) including an enumeration of the number (N) of slave devices connected on the bus (SPI+).

16. The system according to any one of claims 9 to 15, wherein the synchronous data bus (SPI+) includes a clock line (SCK) and the master device (MT) is configured to generate a clock signal on the clock line (SCK), intended to clock the exchanges and transmissions of data between the devices (MT, ES1-ESN) connected on the bus (SPI+).

17. The system according to any one of claims 9 to 16, wherein the master device (MT) and the slave devices (ES1-ESN) are configured to generate the different commands, communications and transmissions of data are clocked according to a synchronous data communication protocol of the serial peripheral interface SPI protocol type.

18. The system according to any one of claims 9 to 17, wherein the selection channel includes a first master output - slave input line (MOSIs) and a first master input - slave output line (MISOs), connecting one-to-one in series the master device (MT) and the N slave device (ES1-ESN), and the transmission channel includes a second master output - slave input line (MOSIp) and a second master input- slave output line (MOSIp), connecting in parallel the N slave devices (ES1-ESN) with the master device (MT).

19. The system according to claim 18, wherein the master device (MT) and the slave devices (ES1-ESN) include a first bus interface (BLSPI) of the serial peripheral interface SPI type, including an elementary clock line terminal (SCK), a master output terminal - elementary slave input (MOSI) and a master input terminal - elementary slave output (MISO), as well as a second bus interface including a first master output terminal - slave input (MOSIs) and a first master input terminal - slave output (MISOs), and a second master output terminal - slave input (MOSIp) and a second master input terminal - slave output (MOSIp), the second bus interface further comprising an output-input switch (SWOI) connecting the master output terminal - elementary slave input (MOSI) to one or the other of said first or second master output terminal - slave input (MOSIs, MOSIp) and an input-output switch (SWIO) connecting the master input terminal - elementary slave output (MISO) to either of said first or second master input terminal - slave output (MISOs, MISOp).
